# EUROPÄISCHE PATENTSCHRIFT

(11) **EP 1 939 421 B1**
(45) Veröffentlichungstag und Bekanntmachung des Hinweises auf die Patenterteilung: **24.12.2008**
(21) Anmeldenummer: 07118845.2
(22) Anmeldetag: 19.10.2007
(51) Int. Cl.: F01N 3/20, B01D 53/94, C01C 1/00

(54) **Dosierungsvorrichtung für Festharnstoff-Partikel**
Dosing device for particles of solid uretic particles
Dispositif de dosage pour particules d'urée solide

(30) Priorität: 29.12.2006 DE 102006062026
(43) Veröffentlichungstag der Anmeldung: 02.07.2008
(73) Patentinhaber: Pierburg GmbH, 41460 Neuss (DE)
(72) Erfinder: Lappan, Rolf, 50733, Köln (DE); Nowak, Martin, 40476, Düsseldorf (DE); Köster, Andreas, 45149, Essen (DE); Nigrin, Sven, 40468, Düsseldorf (DE)
(74) Vertreter: Patentanwälte ter Smitten

(56) Entgegenhaltungen:
- EP-A- 1 634 853
- WO-A-20/04042209
- WO-A-20/06108566
- US-A- 5 813 224

## Beschreibung

Die Erfindung betrifft eine Dosiervorrichtung für Festharnstoff-Partikel,

Zur Aufbereitung von Abgasen von Kraftfahrzeugen ist es insbesondere bei Dieselmotoren bekannt, dem Abgas flüssigen Harnstoff zuzuführen. Ferner ist es bekannt, festen Harnstoff, der beispielsweise in Form von Pellets, Pulver oder Granulat vorliegt, thermisch aufzubereiten und das hierbei u. a. entstehende Ammoniak dem Abgas zuzuführen. Die Aufbereitung des Festharnstoff erfolgt hierbei zunächst durch eine Thermolyseeinrichtung der die Festharnstoff-Partikel zugeführt werden. In der Thermolyseeinrichtung erfolgt ein thermisches Zersetzen des Festharnstoffs im Wesentlichen in Ammoniak (NH₃) und Isocyansäure (HNCO). Der Thermolyseeinrichtung in Strömungsrichtung nachgeschaltet ist eine Hydrolyseeinrichtung, in der ein Umwandeln der Isocyansäure in Gegenwart von Wasser (H₂O) in Ammoniak (NH₃) und Kohlendioxid (CO₂) erfolgt.

Zur Bereitstellung von Festharnstoff-Pellets zu der Thermolyseeinrichtung ist aus DE 102 51 498 eine Dosiervorrichtung bekannt. Die Dosiervorrichtung weist einen Vorratsbehälter zur Bevorratung von Festharnstoff-Pellets auf. Der Vorratsbehälter ist mit einer Vereinzelungseinrichtung zum Bereitstellen einzelner Festharnstoff-Pellets verbunden. Die Pellets fallen aufgrund der Schwerkraft in Richtung der Vereinzelungseinrichtung. Die Vereinzelungseinrichtung weist ein Förderrad mit mehreren Kammern auf. Bei den Kammern handelt es sich um Durchgangsöffnungen, die in axialer Richtung des Förderrads verlaufen. Die Größe der einzelnen Kammern ist geringfügig größer als der Durchmesser der Pellets. Durch Drehen des Förderrads der Vereinzelungseinrichtung gelangt ein Pellet in den Bereich einer Fördereinrichtung. Die Fördereinrichtung weist einen mit Druck beaufschlagbaren Kanal auf, wobei das Pellet durch den Druck in einen Förderkanal gelangt, der zu der Thermolyseeinrichtung führt. Neben Verunreinigungen sammeln sich in dem Vorratsbehälter auch Festharnstoff-Teilchen. Bei den Festharnstoff-Teilchen kann es sich um Bruchstücke einzelner Pellets oder um Abrieb, d. h. staubförmigen Festharnstoff handeln. Die Festharnstoff-Teilchen und andere Verunreinigungen können durch ein Eindringen in den Antrieb des Förderrades den Antrieb schädigen. Auch ist es möglich, dass aufgrund der Festharnstoff-Teilchen das Förderrad blockiert oder schwergängig wird.

Um die einzelnen Kammern des Förderrades, beispielsweise von Festharnstoff-Bruchstücken zu reinigen ist aus DE 102 51 498 ferner ein Putzrad bekannt. Dieses weist Ansätze auf, die von unten in die Kammern des Förderrades eingeführt werden, um Bruchstücke aus den Kammern herauszudrücken. Die Drehachse des Putzrades ist senkrecht zur Drehachse des Förderrades, wobei das Putzrad durch das Förderrad selbst angetrieben wird. Die in der Dosiervorrichtung vorhandenen Verunreinigungen und Festharnstoff-Teilchen können auch zum Beschädigen des Putzrades führen, wobei wiederum ein Blockieren oder eine Schwergängigkeit des Putzrades auftreten kann.

Aufgabe der Erfindung ist es, die Gefahr von Beschädigungen durch Verunreinigungen und Festharnstoff-Teilchen bei einer Dosiervorrichtung für Festharnstoff-Partikel zu verringern.

Die Lösung der Aufgabe erfolgt erfindungsgemäß durch die Merkmale des Anspruchs 1.

Die erfindungsgemäße Dosiervorrichtung weist einen Vorratsbehälter zur Bevorratung von Festharnstoff-Partikeln, insbesondere Festharnstoff-Pellets auf. Ferner ist eine Vereinzelungseinrichtung, die insbesondere ein Förderrad mit mehreren Kammern aufweist, vorgesehen. Durch die Vereinzelungseinrichtung erfolgt eine Bereitstellen von vorzugsweise einem einzigen Festharnstoff-Pellet oder einer definierten Menge bzw. Anzahl an Festharnstoff-Partikeln. Ferner weist die Dosiervorrichtung eine Fördereinrichtung zum Fördern der bereitgestellten Festharnstoff-Partikel zu einer Aufbereitungseinrichtung auf. Insbesondere handelt es sich bei der Fördereinrichtung um eine pneumatische Fördereinrichtung. Die Aufbereitung der Festharnstoff-Partikel erfolgt entsprechend dem Stand der Technik in einer Thermolyse- und Hydrolyseeinrichtung. Erfindungsgemäß weist die Vereinzelungseinrichtung eine Aufnahmekammer zur Aufnahme von Verunreinigungen und Festharnstoff-Teilchen auf. Durch Vorsehen der Aufnahmekammer wird so zumindest ein Teil der Verunreinigungen, der Bruchstücke sowie des Abriebs aufgenommen und gelangt nicht in den Antrieb der Vereinzelungseinrichtung oder einer gegebenenfalls vorgesehenen Reinigungseinrichtung, wie einem Putzrad. Hierdurch ist die Gefahr des Klemmens oder Blockierens des Förderrads und/ oder eines Putzrades verringert.

Gegebenenfalls können mehrere Aufnahmekammern in unterschiedlichen Bereichen der Dosiervorrichtung angeordnet sein. Hierbei ist die mindestens eine Aufnahmekammer vorzugsweise derart angeordnet, dass auftretende Verunreinigungen aufgefangen werden, unmittelbar bevor sie in einen kritischen Bereich der Vereinzelungseinrichtung, insbesondere des Förderrades und des entsprechenden Antriebs gelangen. Vorzugsweise ist die Aufnahmekammer derart angeordnet, dass sie ein Förderrad der Vereinzelungseinrichtung in Draufsicht, zumindest teilweise umgibt. Hierbei ist die Aufnahmekammer zum Förderrad selbst vorzugsweise versetzt angeordnet, um insbesondere zwischen dem Förderrad oder einem anderen entsprechenden Bauteil der Vereinzelungseinrichtung und einem Gehäuseteil oder dergleichen auftretenden Verunreinigungen etc. aufnehmen zu können. Hierdurch werden durch einen derartigen Schlitz, der beispielsweise zwischen einem Förderrad und einem Gehäuseteil angeordnet ist, auftretende Verunreinigungen etc. von der Aufnahmekammer aufgenommen. Somit erfolgt die Aufnahme von Verunreinigungen, wie insbesondere Festharnstoffabrieb, in kritischen Bereichen der Vereinzelungseinrichtung. Hierbei ist die Aufnahmekammer vorzugsweise kreisringförmig oder teil-kreisringförmig ausgebildet.

Vorzugsweise sind zusätzliche Förderelemente vorgesehen, durch die die Verunreinigungen und die Festharnstoff-Teilchen in Richtung der Aufnahmekammer gefördert werden. Insbesondere sind die Förderelemente derart angeordnet, dass Verunreinigungen, etc. aus kritischen Bereichen weggefördert werden. Bei den Förderelementen kann es sich beispielsweise um Bürsten handeln. Vorzugsweise weisen die Förderelemente Ausnehmungen auf, bzw. sind als Ausnehmungen ausgebildet. Insbesondere sind derartige Ausnehmungen im Förderrad vorgesehen. Hierbei sind die einzelnen, insbesondere schlitz- oder rillenförmig ausgebildeten Ausnehmungen vorzugsweise radial angeordnet. Um das Fördern kleiner Teilchen und insbesondere von Staub in Richtung der Aufnahmekammer weiter zu verbessern, können die Ausnehmungen sichelförmig ausgebildet sein, wobei die Krümmung der Ausnehmungen in Drehrichtung verläuft. Besonders bevorzug ist es hierbei, dass die schlitz- oder rillenförmigen Ausnehmungen zwischen den einzelnen in dem Förderrad vorgesehenen Kammern angeordnet sind. Hierdurch ist ein guter Transport von Verunreinigungen, etc. gewährleistet.

Die Aufnahmekammer kann in einem unteren und/ oder einem oberen Gehäuseteil angeordnet sein. Vorzugsweise ist die Aufnahmekammer in einem unteren Gehäuseteil angeordnet, wobei ein oberes Gehäuseteil die Aufnahmekammer zumindest teilweise abdeckt. Besonders bevorzugt ist es hierbei, dass das obere Gehäuseteil Transportausnehmungen wie Rillen oder Schlitze aufweist, die der Aufnahmekammer gegenüberliegend angeordnet sind. Hierzu ist ein sicherer Transport von Verunreinigungen etc. in Richtung der Aufnahmekammer gewährleistet. Die Transportausnehmungen, die in Richtung der Aufnahmekammer offen sind, weisen hierbei vorzugsweise in Richtung des Transportrades weisende Öffnungen auf. Bei schlitzförmig ausgestalteten Transportausnehmungen verlaufen diese vorzugsweise im Wesentlichen radial.

Zusätzlich zu der Aufnahmekammer kann zwischen dem unteren Gehäuseteil und dem Förderrad mindestens ein Dichtelement angeordnet sein. Hierdurch ist das Eindringen von Verunreinigungen, insbesondere Festharnstoff-Staub zwischen diese beiden Bauteile und somit in Richtung eines Antriebs des Förderrades vermieden. Als Dichtelement kann insbesondere ein kreisringförmiger Ansatz vorgesehen sein, der in eine kreisringförmigen Ausnehmung ragt, so dass eine Labyrinthdichtung ausgebildet ist.

Gegebenenfalls kann die Aufnahmekammer mit einem Auffangbehälter zur Aufnahme größerer Mengen an Verunreinigungen etc. verbunden sein. Zusätzlich kann beispielsweise ein Entleeren der Aufnahmekammer, beispielsweise durch Ausblasen erfolgen. Hierbei können die in der Aufnahmekammer vorhandenen Verunreinigungen, etc. in Richtung des Aufnahmebehälters gefördert werden.

Nachfolgend wird die Erfindung anhand einer bevorzugten Ausführungsform, unter Bezugnahme auf die anliegenden Zeichnungen näher erläutert,

Es zeigen:
- Fig. 1: eine schematische Seitenansicht einer Dosiervorrichtung,
- Fig. 2: eine schematische Teil-Schnittansicht der Vereinzelungssowie der Fördereinrichtung,
- Fig. 3: eine schematische perspektivische Draufsicht eines unteren Gehäuseteils sowie des Förderrades,
- Fig. 4: eine schematische perspektivische Ansicht eines oberen Gehäuseteils sowie des Förderrades von unten und
- Fig. 5: eine schematische Teil-Schnittansicht des Förderrades sowie des unteren Gehäuseteils.

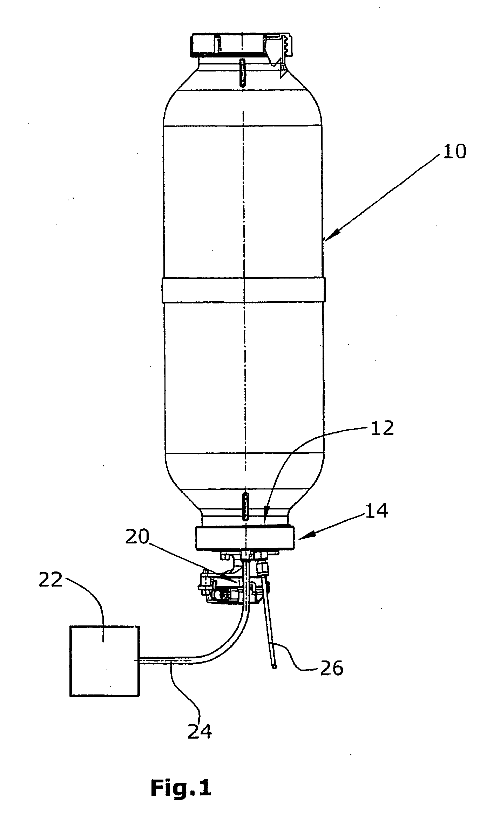

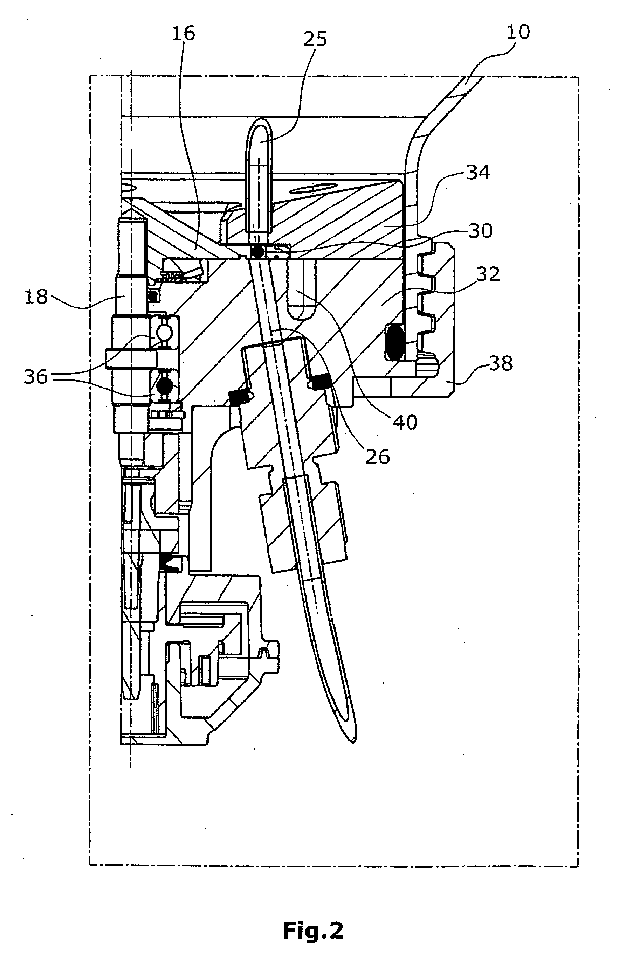

Die Dosiervorrichtung weist einen Vorratsbehälter 10 zur Aufnahme von Festharnstoff-Pellets auf. Der Vorratsbehälter 10 kann hierbei als nachfüllbarer Behälter und auch als austauschbare Patrone ausgebildet sein. Ebenso kann der Vorratsbehälter 10 eine Füllstandsanzeige bzw. eine FüllstandsÜberwachungseinrichtung aufweisen. Eine untere Öffnung 12 des Vorratsbehälters 10 ist mit einer Vereinzelungseinrichtung 14 verbunden. Die Vereinzelungseinrichtung 14 weist ein Förderrad 16 (Fig. 2) auf, das über eine Antriebswelle 18 mit einem Antrieb, wie einem Elektromotor 20 (Fig. 1) verbunden ist. Ferner weist die Dosiervorrichtung eine Fördereinrichtung auf, bei der es sich im dargestellten Ausführungsbeispiel um eine Druckluft-Fördereinrichtung handelt Diese umfasst eine Druckluftpumpe 22, die über eine Leitung 24 mit der Vereinzelungseinrichtung 14 verbunden ist. Die durch die Vereinzelungseinrichtung 14 vereinzelten Festharnstoff-Pellets werden mit Hilfe der Fördereinrichtung 22 in einen Verbindungskanal 26 gefördert Der Verbindungskanal 26 ist mit einer nicht dargestellten Aufbereitungseinrichtung verbunden, die üblicherweise eine Thermolyse- sowie eine Hydrolyseeinrichtung umfasst.

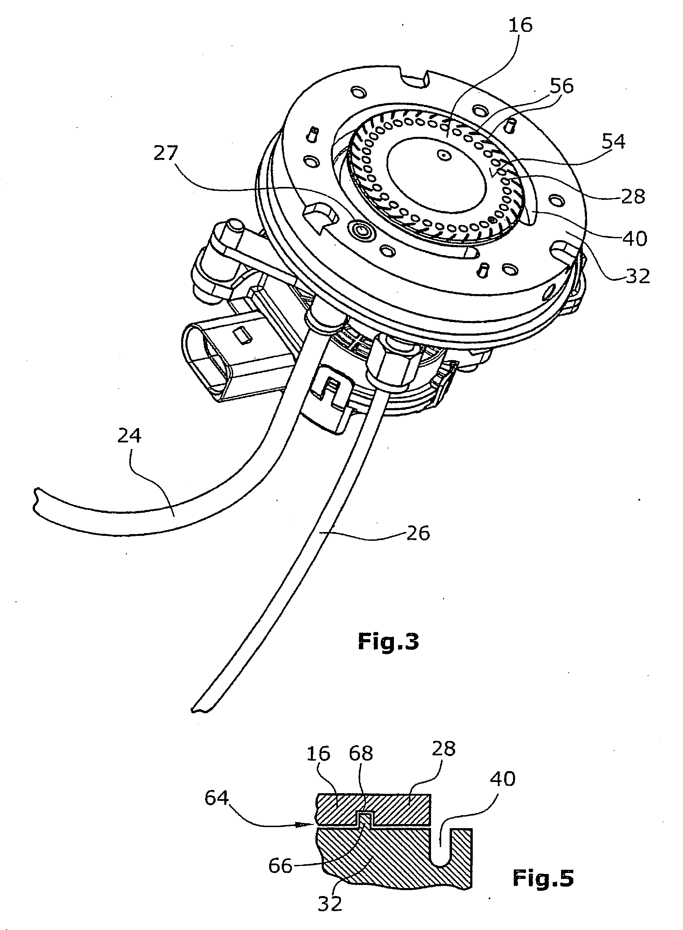

Die in dem Vorratsbehälter vorhandenen Festharnstoff-Pellets fallen aufgrund der Schwerkraft im dargestellten Ausführungsbeispiel in einzelne zylindrisch ausgebildete Kammern 28 des scheibenförmig ausgebildeten Förderrads 16. Durch Drehen des Förderrads 16 mit Hilfe des Antriebs 20 wird stets eine Kammer 28 in einem Bereich zwischen einem mit der Druckluftzuführleitung 24 verbundenen bügelförmigen Verbindungskanal 25 und dem gegenüberliegenden Verbindungskanal 26 angeordnet. Durch einen Druckluftimpuls erfolgt ein Fördern des Pellets 30 in den Verbindungskanal 26. Der bügelförmige Verbindungskanal 25 ist über eine Öffnung 27 (Fig. 3) mit der Druckluftzuführleitung 24 verbunden.

Im dargestellten Ausführungsbeispiel weist die Vereinzelungseinrichtung 14 ein unteres Gehäuseteil 32 und ein oberes Gehäuseteil 34 auf. In dem unteren Gehäuseteil 32 ist die Welle 18 über Lager 36 gelagert. Im Bereich der Elemente 24 und 26 der Fördereinrichtung ist zwischen den beiden Gehäuseteilen 32, 34 ein Schlitz vorgesehen, in den das Förderrad 16 ragt. Hierdurch ist es möglich, die Druckluftzuführleitung 24 in dem oberen Gehäuseteil 34 in einer Lage zu befestigen, in der die Auslassöffnung der Druckluftzuführleitung 24 der mit einem Pellet 30 gefüllten Kammer gegenüber liegt. Die Kammern 28 des Förderrades sind in den anderen Bereichen durch das obere Gehäuseteil 34 nicht abgedeckt, so dass die Pellets 30 in die einzelnen Kammern 28 fallen können. Das obere Gehäuseteil ist über Schrauben oder dgl. mit dem unteren Gehäuseteil 32 verbunden. Über eine Muffe 38 ist der Vorratsbehälter 10 mit dem unteren Gehäuseteil 32 verbunden.

In dem unteren Gehäuseteil 32 ist eine Aufnahmekammer 40 zur Aufnahme von Verunreinigungen und Festharnstoff-Teilchen vorgesehen. Die Aufnahmekammer 40 ist teil-kreisringförmig ausgebildet (Fig. 3). Die Aufnahmekammer 40 umgibt das Förderrad 16 teilweise, wobei die Aufnahmekammer 40 zu dem Förderrad 16 insbesondere nach unten versetzt angeordnet ist.

Um Verunreinigungen und insbesondere Festharnstoff-Staub in die Aufnahmekammer 40 zu fördern, sind ferner Förderelemente vorgesehen. Hierbei handelt es sich u. a. um an einer Unterseite 42 des Förderrads 16 angeordnete Rillen 44. Die Rillen 44 sind sichelförmig ausgebildet und in die durch den Pfeil 46 angedeutete Drehrichtung 46 gekrümmt.

In einer Unterseite 48 des oberen Gehäuseteils 34 sind zusätzlich Transportausnehmungen 50 vorgesehen. Die Transportausnehmungen 50 sind der Aufnahmekammer 40 gegenüberliegend angeordnet und in Richtung der Aufnahmekammer 40 offen. Ferner weisen die Transportausnehmungen 50 in Richtung des Förderrads weisende Öffnungen 42 auf. Festharnstoff-Staub kann somit beispielsweise durch die sichelförmigen Rillen 44 in die Transportausnehmungen 50 gefördert und aus den Transportausnehmungen 50 in die Aufnahmekammer 40 gelangen. Hierbei sind die insbesondere sichelförmigen Rillen 44 vorzugsweise zwischen jede der Kammern 28 des Transportrads 16 angeordnet.

Zusätzliche Förderelemente können an einer Oberseite 54 (Fig. 3) des Transportrads 16 angeordnet sein. Es handelt sich hierbei um nach außen verlaufende Ausnehmungen 56, bei denen es sich insbesondere um Schlitze oder Rillen handelt. Durch die Ausnehmungen 56 erfolgt ebenfalls ein Fördern von Verunreinigungen etc. in Richtung der Aufnahmekammer 40.

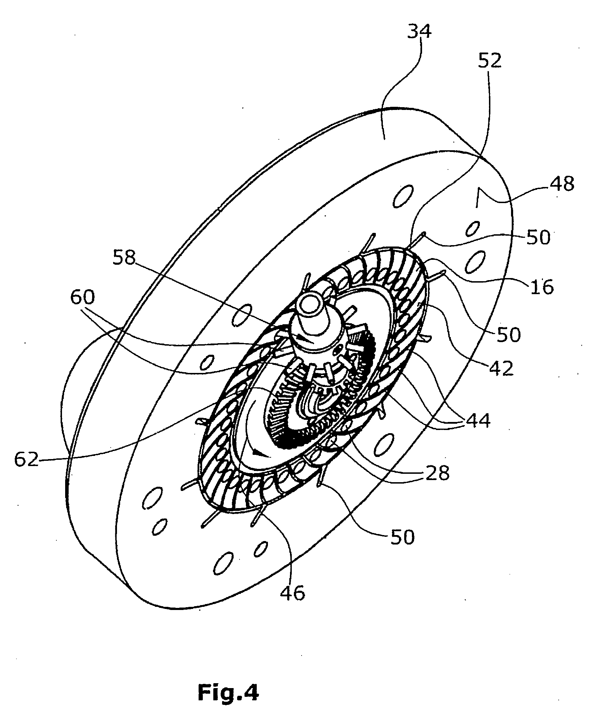

Ferner ist aus Fig. 4 ein Rad 58 ersichtlich. Dieses ist in dem unteren Gehäuseteil 32 angeordnet und um eine Längsachse drehbar. Hierdurch werden zylindrische am Umfang verteilte Ansätze 60 in die Kammern 28 von unten eingeführt, um die Kammern 28 zu reinigen und beispielsweise Bruchstücke der Festharnstoff-Pellets zu entfernen. Das Drehen des Putzrads 58 erfolgt im dargestellten Ausführungsbeispiel mit Hilfe eines am Förderrad 16 vorgesehenen Zahnrads 62.

Zusätzlich zu den vorstehend beschriebenen Maßnahmen und zum Fördern von Verunreinigungen und dergleichen kann zwischen dem Förderrad 16 und dem unteren Gehäuseteil 32 eine Labyrinthdichtung 64 (Fig, 5) vorgesehen sein. Die Labyrinthdichtung 64 weist im dargestellten Ausführungsbeispiel einen kreisringförmigen Ansatz 66 auf, der fest mit dem unteren Gehäuseteil 32 verbunden ist oder einen Bestandteil des unteren Gehäuseteils bildet. Der Ansatz 66 ragt in eine entsprechende kreisringförmige Ausnehmung 68, die an der Unterseite des Förderrads vorgesehen ist.

## Patentansprüche

1. Dosiervorrichtung für Festharnstoff-Partikel, mit
einem Vorratsbehälter (10) zur Bevorratung von Festharnstoff-Partikeln (30),
einer Vereinzelungseinrichtung (14) zum Bereitstellen von Festharnstoff-Partikeln (30) aus dem Vorratsbehälter (10) und
einer Förderreinrichtung (22, 24, 26) zum Fördern der bereitgestellten Festharnstoff-Partikel (30) zu einer Aufbereitungseinrichtung,
**dadurch gekennzeichnet, dass**
die Vereinzelungseinrichtung (14) eine Aufnahmekammer (40) zur Aufnahme von Verunreinigungen und Festharnstoff-Teilchen aufweist.

2. Dosiervorrichtung nach Anspruch 1, **dadurch gekennzeichnet, dass** die Vereinzelungseinrichtung (14) ein Förderrad (16) aufweist, das zumindest teilweise von der Aufnahmekammer (40) umgeben ist.

3. Dosierungsvorrichtung nach einem der Ansprüche 1 oder 2, **gekennzeichnet durch** Förderelemente (44, 56) zum Fördern von Verunreinigungen und Festharnstoff-Teilchen in Richtung der Aufnahmekammer (40).

4. Dosierungsvorrichtung nach Anspruch 3, **dadurch gekennzeichnet, dass** die Förderelemente (44, 56) vorzugsweise im Förderrad (16) angeordnete Ausnehmungen (44, 56) aufweisen.

5. Dosierungsvorrichtung nach Anspruch 4, **dadurch gekennzeichnet, dass** die Ausnehmungen (44, 56) im Wesentlichen radial verlaufen und/ oder sichelförmig ausgebildet sind.

6. Dosierungsvorrichtung nach einem der Ansprüche 2 - 5, **dadurch gekennzeichnet, dass** die Aufnahmekammer (40) in einem das Förderrad (16) tragenden unteren Gehäuseteil (32) und/ oder einem das Förderrad umgebenden oberen Gehäuseteil (34) angeordnet ist.

7. Dosierungsvorrichtung nach einem der Ansprüche 1 - 6, **dadurch gekennzeichnet, dass** ein oberes Gehäuseteil (34) die Aufnahmekammer (40) zumindest teilweise abdeckt.

8. Dosierungsvorrichtung nach Anspruch 7, **dadurch gekennzeichnet, dass** das obere Gehäuseteil (34) mindestens eine der Aufnahmekammer (40) gegenüberliegende Transportausnehmung (50) aufweist.

9. Dosierungsvorrichtung nach Anspruch 8, **dadurch gekennzeichnet, dass** die Transportausnehmung (50) eine in Richtung des Förderrads (16) weisende Öffnung (52) aufweist.

10. Dosierungsvorrichtung nach einem der Ansprüche 1 - 9, **gekennzeichnet durch** ein zwischen dem unteren Gehäuseteil (32) und dem Förderrad (16) angeordnetes Dichtelement (64).

11. Dosierungsvorrichtung nach Anspruch 10, **dadurch gekennzeichnet, dass** das Dichtelement (64) einen insbesondere kreisringförmigen Ansatz (36) aufweist, der in eine insbesondere kreisringförmige Ausnehmung (68) ragt, wobei der Ansatz vorzugsweise mit dem unteren Gehäuseteil (32) verbunden und die Ausnehmung (68) vorzugsweise in dem Förderrad (16) vorgesehen ist.

## Claims

1. Dosing device for solid urea particles, comprising
a supply container (10) for stocking solid urea particles (30),
a singling means (14) for supplying solid urea particles (30) from the supply container (10) and
a conveyor means (22, 24, 26) for conveying the supplied solid urea particles (30) to a processing means,
**characterized in that**
the singling means (14) comprises a receiving chamber (40) for receiving contaminations and solid urea particles.

2. The dosing device of claim 1, **characterized in that** the singling means (14) comprises a conveyor wheel (16) surrounded at least in part by the receiving chamber (40).

3. The dosing device of one of claims 1 or 2, **characterized by** conveyor elements (44, 56) for conveying contaminations and solid urea particles towards the receiving chamber (40).

4. The dosing device of claims 3, **characterized in that** the conveyor elements (44, 56) have recesses (44, 56) preferably provided in the conveyor wheel (16).

5. The dosing device of claim 4, **characterized in that** the recesses (44, 56) extend substantially radially and/or are crescent-shaped.

6. The dosing device of one of claims 2 - 5, **characterized in that** the receiving chamber (40) is arranged in a lower housing part (32) carrying the conveyor wheel (16) and/or a top housing part (34) surrounding the conveyor wheel.

7. The dosing device of one of claims 1 - 6, **characterized in that** a top housing part (34) covers the receiving chamber (40) at least in part.

8. The dosing device of claim 7, **characterized in that** the top housing part (34) has at least one transport recess (50) opposite the receiving chamber (40).

9. The dosing device of claim 8, **characterized in that** the transport recess (50) has an opening (52) directed towards the conveyor wheel (16).

10. The dosing device of one of claims 1 - 9, **characterized by** a sealing element (64) arranged between the lower housing part (32) and the conveyor wheel (16).

11. The dosing device of claim 10, **characterized in that** the sealing element (64) comprises a projection (36), especially of an annular shape, extending into a recess (68), especially of an annular shape, the projection preferably being connected with the lower housing part (32) and the recess (68) preferably being provided in the conveyor wheel (16).

## Revendications

1. Dispositif de dosage pour particules d'urée solide, comprenant
un réservoir (10) pour stocker des particules d'urée solide (30),
un moyen d'individualisation (14) pour fournir des particules d'urée solide (30) à partir du réservoir (10), et
un moyen transporteur (22, 24, 26) pour transporter les particules d'urée solide (30) fournies à un moyen de préparation,
**caractérisé en ce que**
le moyen d'individualisation (14) comprend une chambre réceptrice (40) pour recevoir des impuretés et des particules d'urée solide.

2. Dispositif de dosage selon la revendication 1, **caractérisé en ce que** le moyen d'individualisation (14) comprend une roue de transport (16) entourée au moins partiellement par la chambre réceptrice (40).

3. Dispositif de dosage selon une des revendications 1 ou 2, **caractérisé par** des éléments transporteurs (44, 56) pour transporter des impuretés et des particules d'urée solide vers la chambre réceptrice (40).

4. Dispositif de dosage selon la revendication 3, **caractérisé en ce que** les éléments transporteurs (44, 56) préférentiellement comprennent des creux (44, 56) ménagés dans la roue de transport (16).

5. Dispositif de dosage selon la revendication 4, **caractérisé en ce que** les creux (44, 56) s'étendent sensiblement dans une direction radiale et/ou sont en forme de croissant.

6. Dispositif de dosage selon une des revendications 2 - 5, **caractérisé en ce que** la chambre réceptrice (40) est disposée dans une partie inférieure du boîtier supportant la roue de transport (16) et/ou une partie supérieure (34) entourant la roue de transport.

7. Dispositif de dosage selon une des revendications 1 - 6, **caractérisé en ce qu'**une partie supérieure du boîtier (34) couvre la chambre réceptrice (40) au moins partiellement.

8. Dispositif de dosage selon la revendication 7, **caractérisé en ce que** la partie supérieure du boîtier (34) comprend au moins un creux de transport (50) vis-à-vis de la chambre réceptrice (40).

9. Dispositif de dosage selon la revendication 8, **caractérisé en ce que** le creux de transport (50) comprend une ouverture (52) orientée vers la roue de transport (16).

10. Dispositif de dosage selon une des revendications 1 - 9, **caractérisé par** un élément de joint (54) disposé entre la partie inférieure du boîtier (32) et la roue de transport (16).

11. Dispositif de dosage selon la revendication 10, **caractérisé en ce que** l'élément de joint (64) comprend une saillie (36), notamment annulaire, en saillie dans un creux (68), notamment annulaire, la saillie étant préférentiellement reliée à la partie inférieure du boîtier (32) et le creux (68) étant préférentiellement prévu dans la roue de transport (16).
